# EUROPEAN PATENT APPLICATION

(11) **EP 2 400 419 A1**
(43) Date of publication of application: **28.12.2011**
(21) Application number: 10305687.5
(22) Date of filing: 28.06.2010
(51) Int. Cl.: G06F 21/00

(54) **Method of regulating interaction between two web sites**

(71) Applicant: Gemalto SA, 92190 Meudon (FR)
(72) Inventor: Campos, Jorge Marcelo, Montreal Québec H3E 1E6 (CA); Biot, Olivier, 13008, Marseille (FR)

(57) **Abstract**

The invention is a method for regulating interactions between first and second web sites. A client comprises first and second services and is embedded in a portable secure token that comprises an identity data related to a subscriber of a telecom mobile network. A first message is sent from the first site to the first service, said first message requests the sending of a second message from the second service to the second site. The method comprises the step of checking a set of rules which contain digital rights associated with interactions between the services, and the step of denying the sending of the second message if the checking step is unsuccessful.

## Description

### (Field of the invention)

The present invention relates to the methods of regulating interactions between two or more web sites or content services. It relates particularly to methods of regulating the interactions between at least two web sites or content services, using a communication channel with a client located in a portable secure token. In particular, such portable secure token may be a SIM card.

### (Prior art)

Portable secure tokens are small machines comprising a memory, a microprocessor and an operating system for computing treatments. In general, portable secure tokens comprise a plurality of memories of different types. For example, they may comprise memory of RAM, ROM, EEPROM or Flash type. Portable tokens have limited computing resources. For example, smart cards are secure electronic tokens.

A SIM card connected to a telecom handset may provide a SIM browsing mechanism. Through such a SIM browsing mechanism, a final user can access to a wide range of web sites or content services. These web sites are embedded in web servers reachable through the Internet or any relevant networks. In this case, the client connected to the server is located on the side of the SIM card.

Different content providers may have their own sites in a single server. When a client embedded in the SIM card has trusted the server, all sites of the server may communicate with the client through a common communication channel. Even if the server has been trusted by the client, security vulnerability remains since a site of the server may try to send fraudulent data to another site of the same server via the connected client. This is a well known attack called cross-site attack. For example, the attack may be carried out through a service access request coming from the client. For instance, the client may send an initial request to retrieve a Horoscope from a first site. The first site sends a response containing malicious data which aims at attacking a sensitive site like a Banking site on the server. The malicious data may generate the sending of a fraudulent request to the targeted banking site. The generation of this fraudulent request can be completely automatic or by cheating the user into doing something that he wouldn't do if he knew what was going to happen. For example, the attack may provide the user with a payment for the horoscope that actually requires him to enter his banking PIN, but actually making a transfer to another user for another amount.

In another example, the attack may be carried out through a Push message coming from the server side. For instance, the Horoscope site may send an initial Push message to the client device/site. This Push message may contain a malicious data which aims at attacking a sensitive site like a Banking site on the server. The malicious data may send a fraudulent request from the client to the targeted Banking site. In the domain of SIM browser, there are two technical solutions which may be used for exchanging data with a distant server: S@T (SIM Alliance Toolikt ― also named SAT) which is specified by the SIM Alliance (See S@T standard 01.50 for instance) and WIB (Wireless Internet Browser). Neither S@T not WIB solutions provide a way to regulate interaction between sites.

There is a need to provide a solution for regulating interactions between sites located on one or several servers which communicate with a SIM browser on client side.

### (Summary of the Invention)

An object of the invention is to solve the above mentioned technical problem.

The object of the present invention is a method for regulating the interactions between first and second web sites. A client comprises first and second services. The client is embedded in a portable secure token that comprises an identity data which is related to a subscriber of a telecom mobile network. A first message is sent from the first site to the first service. This first message aims at sending a second message from the second service to the second site. The method comprises the steps of:
- checking a set of rules which contain digital rights associated with interactions between the services, and
- denying the sending of the second message if the checking step is unsuccessful.

Advantageously, said first and second web sites may be hosted in a single server. The server may be connected to the client through a communication channel. The communication channel may be intended to transport first and second messages.

In one embodiment, the interactions between the services may be of different access types and the set may contain digital rights for each of these access types.

Advantageously, the first service may comprise several elements and the set may contain digital rights for the interaction between each of these elements and the second service.

In one embodiment, the method may comprise the steps of installing a third service in the client, and adding a subset of rules in the set. The added subset of rules may contain digital rights which correspond to the interaction between the third service and said first and second services. The added subset of rules may be initialized with default values.

Advantageously, the added subset of rules may be initialized with a first set of default values when the third service is a sensitive service and the added subset of rules may be initialized with a second set of default values when the third service is a non-sensitive service.

In one embodiment, the set of rules may be updated under the control of a supervisor means which is embedded in the client.

Advantageously, the secure token may be connected to a mobile equipment which comprises an interface allowing communication with a user. When the checking step is unsuccessful, the method may comprise the further steps of seeking the agreement of the user through said interface, and authorizing the sending of the second message if the seeking step is successful.

Another object of the invention is portable secure token comprising an identity data which is related to a subscriber of a telecom mobile network. The portable secure token comprises a client capable of connecting a server through a communication channel. The server comprises first and second web sites. The client comprises first and second services. The first site is capable of sending a first message to the first service through the communication channel. This first message requests the sending of a second message from the second service to the second site through the communication channel. The token comprises a set of rules which contain digital rights associated with interactions between the services. The token comprises a supervisor means adapted to check the set and to deny the sending of the second message if the checking is unsuccessful.

Advantageously, said first and second web sites may be hosted in a server. The client may be able to connect the server through a communication channel which is intended to transport first and second messages.

In one embodiment, the secure token may comprise a SIM browser and the SIM browser may comprise the supervisor means.

Advantageously, the secure token may be a SIM smart card or a Universal Integrated Circuit Card.

In one embodiment, the interactions between the services may be of different access types and the set may contain digital rights for each of these access types.

Advantageously, the first service may comprise several elements and the set may contain digital rights for the interaction between each of these elements and the second service.

In one embodiment, the token may comprise a means which is adapted to add a subset of rules in the set when a third service is installed in the client. The added subset of rules may contain digital rights corresponding to the interaction between the third service and said first and second services. The means may be capable of initializing the added subset of rules with default values.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a server and a client which communicate through a communication channel according to the invention;
- Figure 2 depicts schematically an example of a set of rules according to the invention;
- Figure 3 depicts schematically two examples of services embedded in the client;
- Figure 4 depicts schematically an example of a server communicating with a client embedded in a SIM card plugged to a mobile phone according to the invention; and
- Figure 5 depicts schematically an example of a client according to the invention.

### (Detailed description of the preferred embodiments)

The invention may apply to any types of portable secure token comprising subscriber identity data, a SIM browser and intended to contain a plurality of services which may exchange data with several web sites or content services.

The invention may apply to a plurality of web sites or content services hosted in a common server or in several servers.

The present invention relies on the fact that the portable secure token comprises a cross-site execution supervisor in charge of checking the access conditions between the services embedded in or accessing the portable secure token. The cross-site execution supervisor uses a set of predefined (and configurable) access control data for making a decision.

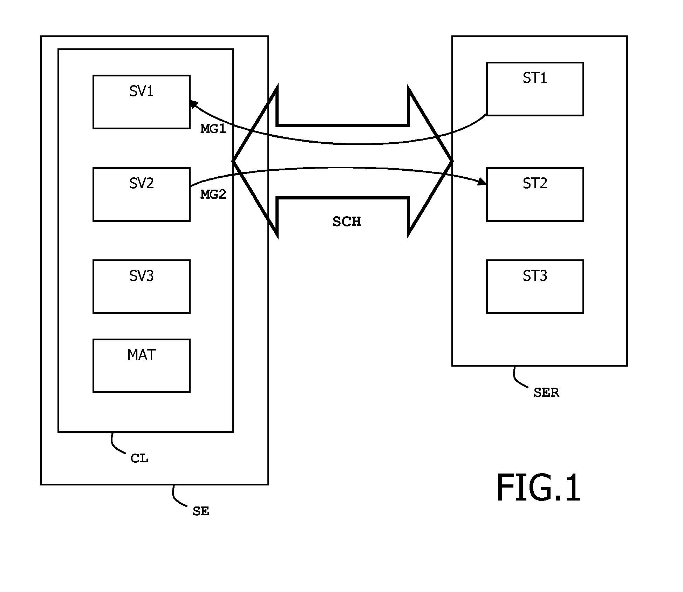

**Figure 1** shows an example of a system comprising a server SER and a client CL which communicate through a communication channel SCH according to the invention.

The server SER is a distant server that contains three sites ST1, ST2 and ST3. Each of these sites belongs to a distinct content provider. For instance the site ST1 may be a weather forecast site which provides free weather report. The site ST2 may be a merchant site which allows a user to buy products. The site ST3 may be a Bank site which allows a user to access his/her bank account and to perform banking transactions.

The site ST1 may be regarded as a non-sensitive site. The sites ST2 and ST3 may be regarded as sensitive sites.

The client CL is embedded in a portable secure token. The portable secure token may be a microprocessor card or a smart card for example. In a preferred embodiment, the portable secure token is a SIM card. The client CL comprises a software service SV1 that corresponds to the site ST1. Similarly, the client CL comprises a software service SV2 corresponding to ST2 and a software service SV3 associated with the site ST3. The client CL further comprises a set MAT of rules which contain digital rights associated with interactions between the services SV1, SV2 and SV3.

Each of these rules defines whether access to a service for another service is allowed or not. The access rights may depend of the type of access.

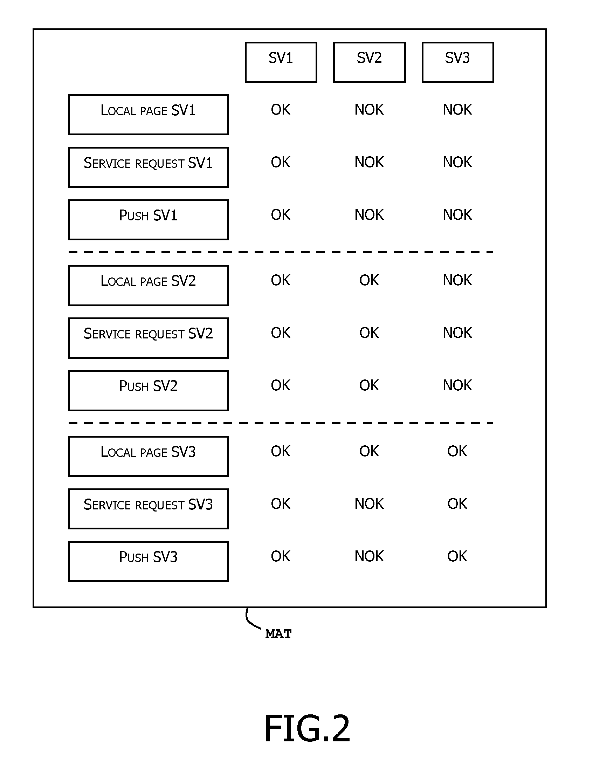

**Figure 2** provides an example of a set of rules which may be used according to the invention. The set is noted MAT.

In a preferred embodiment, the set MAT is a matrix (table) which contains a preset behavior for each kind of interaction between all services installed in the client CL.

Alternatively, the set MAT may be managed via a list, a file record or any relevant container.

In the example of Figure 2, a row corresponds to the origin of an access request and a column corresponds to a targeted service.

An access request (to a targeted service) may come from either a local page, or a service request/response message or a Push message.

"Local Page SVn" means that the access request was issued by a page which belongs to the service SVn. This page is assumed to be a local page. In other words, this page is contained in the client CL.

"Service request SVn" means that this is a service request sent by the service SVn which is the origin of the access request. In other words, a Service request has been sent by the service SVN to a server and the message received in response contain an access request to another service.

"Push SVn" means that this is a Push message received by the service SVn which is the origin of the access request.

In the example of Figure 2, the service SV1 may be accessed in all cases. The service SV3 may be accessed only by a request coming from the service SV3. The service SV2 may be accessed only by a request coming from the service SV2 or by a request coming from a local page of the service SV3.

Back to Figure 1, a communication session is assumed to be established between the server SER and the client CL. This communication session defines a communication channel SCH which is intended to be used for all exchanges between the client CL and the server SER. A Push message MG1 is sent from the site ST1 to the service SV1 through the communication channel SCH. The Push message MG1 contains a data that aims at triggering the sending of a message MG2 from the service SV2 to the site ST2. The method of the present invention comprises a step of checking the set MAT of rules before sending the message MG2.

In the example of Figure 2, the set MAT contain a rule which defines that a "Push SV1" is not authorized to access the service SV2. Consequently, the sending of the message MG2 is denied by the client CL.

The communication channel SCH may be a secure channel. In particular, a secure channel may be established further to a mutual authentication phase between the client CL and the server SER.

An advantage of the invention is to prevent the unwanted sending of message from a client to a site which is embedded in a server having an active communication channel with the client. Even if the client has trusted the server before establishing the communication channel, the unwanted message is blocked by the client.

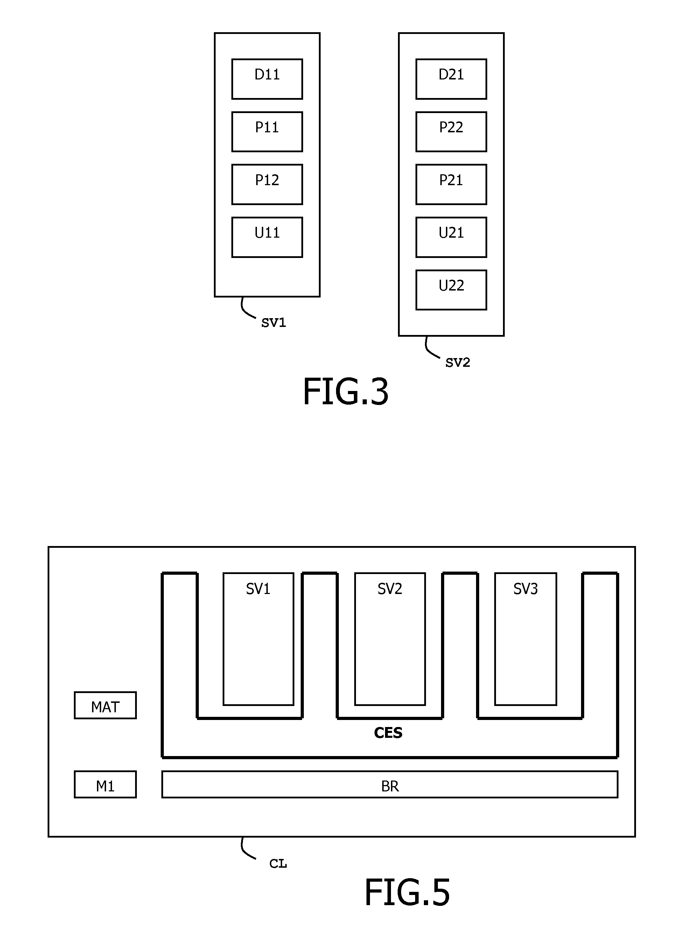

**Figure 3** provides two examples of structure for the services embedded in the client CL.

Basically, a service comprises one or several elements among the following list: page (or deck), plug-in and URL (Uniform Resource Locator).

In the example of figure 3, the service SV1 contains a page D11, two plug-ins P11 and P12 and an URL U11. For instance the page D11 may contain the list of signs in the zodiac for the customer to choose one, the plug-in P11 may contain birth date information of the customer to be provided to the server and the URL U11 may be the URL in the remote server to retrieve the horoscope for the chosen sign.

The service SV2 contains a page D21, two plug-ins P21 and P22. The service SV2 contains two URLs U21 and U22. For instance, the page D21 may contain a list of ringtones to be bought by the customer, the plug-in P21 may contain credit card information to be submitted to the server and the plug-in P22 may be dedicated to the encryption of the PIN. The URL U21 may be used to send the information of a purchase, credit card, pin, ringtone. The URL U22 may be a local one to allow the user to change credit card information.

Advantageously, the set MAT of rules may contain access control information (i.e. digital rights) for each of the elements belonging to the services installed in the client CL. For example, the set MAT may define the access authorization between each page, plug-in and URL of a service and all the services present in the client CL.

By assuming that the service SV3 is not already installed in the client CL, the step of installation of the service SV3 should be followed by a step of updating the set MAT. In particular, a subset of rules may be added into the set MAT in order to define all possible interactions. Notably, the added subset of rules provides the access control information for the interaction between the service SV3 and all services embedded in the client CL. Advantageously, this subset of rules may be initialized with default values. For example the default value may correspond to a "denied" value.

Alternatively, the default value may depend on the security level of the services. For example, access to non-sensitive services may be set to "authorized" (i.e."OK") and access to sensitive services may be set to "denied" (i.e."NOK").

In another embodiment, the access to non-sensitive services may be set to "authorized" (i.e."OK"). The access to sensitive services may be set to "denied" from a remote invocation and may be set to "authorized" from a local invocation. (e.g. from a request originated from a service belonging to the client).

Anyway, the upgrade of the set MAT is protected by specific rights in order to avoid unwanted modification of the set of rules. Preferably, a supervisor means is in charge of controlling the updating of the set MAT.

The server SER may send a request for updating the set MAT in a secure channel.

The set MAT should be updated when a service is installed or removed in the client CL. The set MAT may be also updated at any time. That is to say, the set MAT may be updated without relation to the step of installing or deleting a service.

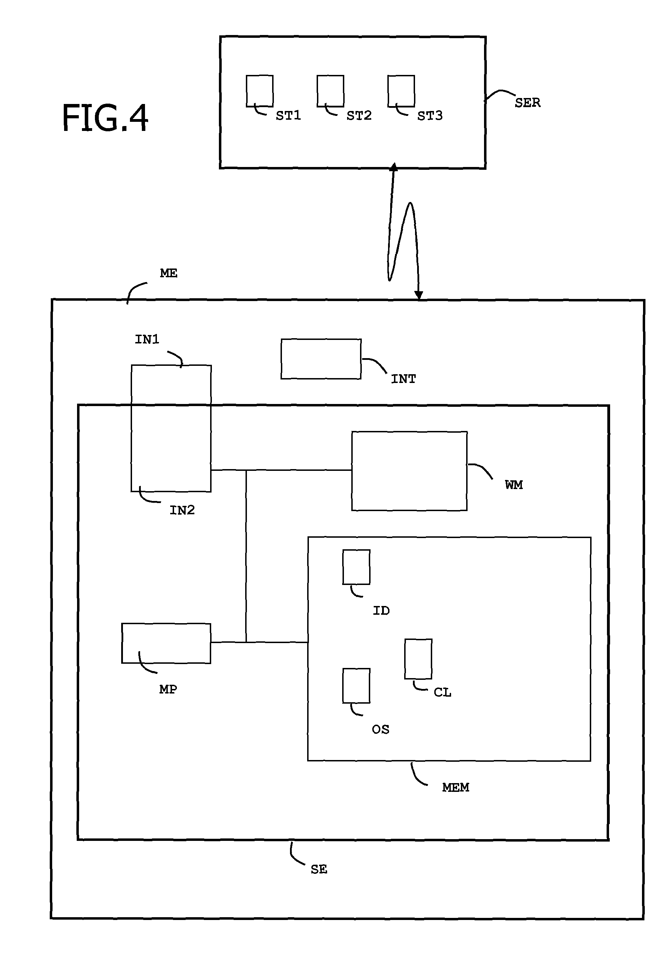

**Figure 4** provides an example of a server SER which may communicate with a client CL embedded in a SIM card SE plugged to a mobile phone ME according to the invention.

In the example of Figure 4, the portable secure token SE is a SIM card which comprises identity data ID that is related to a subscriber of a telecom mobile network. The SIM card SE comprises an operating system OS, a working memory WM, a microprocessor MP, a non volatile memory MEM and a communication interface IN2 for communicating with a mobile phone. The SIM card SE comprises a client CL which is able to connect the server SER through a communication channel. The server SER comprises three web sites ST1, ST2 and ST3 corresponding to as many services installed into the client CL. The SIM card SE comprises a set MAT of rules which contain access control data (i.e. digital rights) associated with interactions between the services. The client CL comprises a supervisor means CES (not drawn at Fig. 4) which is capable of checking the set MAT and to authorize or to deny the sending of a message according to the result of the checking. In particular, the supervisor means CES is able to deny the sending of a message from a service of the client CL to the server SER if the checking is unsuccessful.

The mobile phone ME comprises a communication interface IN1 for communicating with the connected SIM card. The mobile phone ME comprises a user interface INT allowing exchanging information with a user. This interface INT may be made of a display screen and a keyboard for example.

In one embodiment of the invention, when the checking of the set MAT is unsuccessful, the method may comprise the additional step of seeking the agreement of the user through the interface INT. If the user provides an agreement, the sending of the message toward the server may be authorized. In this embodiment, the set MAT of rules may contain access control values with three different values: "authorized", "Denied" and "to be confirmed by user".

**Figure 5** provides an example of the structure of a client CL according to the invention. The client CL is embedded in a portable secure token.

The client CL comprises three services SV1, SV2 and SV3 intended to exchange data with corresponding sites through a communication channel established between the client CL and a server. The client CL comprises a SIM browser BR and a set MAT of rules which contain digital rights associated with interactions between the three services SV1, SV2 and SV3. The client CL comprises a supervisor means CES able to check the set MAT and to deny the sending of a message to a site if the checking is unsuccessful.

The SIM browser BR is a code interpreter capable of interpreting data coming from a web server and local data coming from the SIM card SE. Thus the SIM browser BR is able to interpret bytecode data received from a web site. Usually this bytecode data complies with S@T or WIB format.

In the embodiment of Figure 5, the client CL comprises a means M1. The means M1 is able to add a subset of rules in the set MAT when a new service is installed in the client. Such a subset of rules contains access control data (i.e. digital rights) corresponding to the interaction between the new service and all services embedded in the client CL.

Advantageously, the means M1 is able to remove a subset of rules from the set MAT.

In one embodiment, the means M1 is able to initialize the subset of rules with default values. These default values may be stored in client CL. For example these default values may be stored either in the means M1, or in the set MAT or in the supervisor means CES.

Advantageously, the supervisor means CES may comprise the means M1.

In one embodiment, the supervisor means CES may be a plug-in associated with the SIM browser BR.

Alternatively, the supervisor means CES may be a separate program or applet which is invoked by the SIM browser BR to perform the checking of access conditions.

In another embodiment, the SIM browser BR may comprise the supervisor means CES.

Advantageously, the portable secure token which comprises the client CL may be a Universal Integrated Circuit Card (UICC).

In the above-described examples the set MAT defines access rules for every interaction between all services. Alternatively, the set MAT may define access rules for interactions between groups of services.

The invention also applies when the server SER is embedded in the portable secure token SE. For example the token SE may be a UICC which comprises a Smart Card Web Server (SCWS) where several web sites are active.

Thanks to the supervisor means CES, all services which are installed in the client CL are isolated from each other. The interaction between services is authorized or denied by the supervisor means CES.

An advantage of the invention is to allow the client CL to manage a single browsing instance solution when handling communication session with a plurality of web sites. This point is important since it allows to limit the need of memory resources in the portable secure token.

Thanks to the invention, many kinds of application may be securely used from a mobile phone. For example, security of the following sensitive applications m-banking (mobile-banking), m-payment, m-commerce, m-wallet and m-health may be enhanced.

The invention is not limited to the management of interaction between two web sites only. It also applies to regulation of interactions between any number of web sites or content services.

Although the above-described embodiments are oriented on web sites hosted in a single server, the invention also applies to web sites hosted in distinct servers.

## Claims

1. A **method** for regulating interactions between first and second web sites (ST1, ST2), a client (CL) comprising first and second services (SV1, SV2), said client (CL) being embedded in a portable secure token (SE) that comprises an identity data (ID) related to a subscriber of a telecom mobile network, a first message (MG1) being sent from the first site (ST1) to the first service (SV1), said first message (MG1) aiming at sending of a second message (MG2) from the second service (SV2) to the second site (ST2),
**characterized in that** said method comprises the steps of:
- checking a set (MAT) of rules which contain digital rights associated with interactions between the services (SV1, SV2),
- denying the sending of the second message (MG2) if the checking step is unsuccessful.

2. A method according to claim 1, wherein said first and second web sites (ST1, ST2) are hosted in a single server (SER) , wherein the server (SER) is connected to said client (CL) through a communication channel (SCH), and wherein said communication channel (SCH) is intended to transport first and second messages (MG1, MG2).

3. A method according to any one of claims 1 to 2, wherein the interactions between the services (SV1, SV2) may be of different access types and wherein the set (MAT) contains digital rights for each of these access types.

4. A method according to any one of claims 1 to 3, wherein the first service (SV1) comprises several elements (D11, P11, P12, UR11) and wherein the set (MAT) contains digital rights for the interaction between each of said elements (D11, P11, P12, U11) and the second service (SV2).

5. A method according to any one of claims 1 to 4, wherein said method comprises the steps of:
- installing a third service (SV3) in said client (CL),
- adding a subset of rules in the set (MAT), said subset of rules containing digital rights corresponding to the interaction between the third service (SV3) and said first and second services (SV1, SV2), said subset of rules being initialized with default values.

6. A method according to claim 5, wherein said subset of rules is initialized with a first set of default values when the third service (SV3) is a sensitive service and said subset of rules is initialized with a second set of default values when the third service (SV3) is a non-sensitive service.

7. A method according to any one of claims 1 to 6, wherein the set (MAT) of rules is updated under the control of a supervisor means (CES) embedded in the client (CL).

8. A method according to any one of claims 1 to 7, wherein the secure token (SE) is connected to a mobile equipment (ME) which comprises an interface (INT) allowing communication with a user and wherein if the checking step is unsuccessful, said method comprises the further steps of:
- seeking the agreement of the user through said interface (INT),
- authorizing the sending of the second message (MG2) if the seeking step is successful.

9. A **portable secure token** (SE) comprising identity data (ID) related to a subscriber of a telecom mobile network, said token (SE) comprising a client (CL) able to connect a server (SER) through a communication channel (SCH), said server (SER) comprising first and second web sites (ST1, ST2), said client (CL) comprising first and second services (SV1, SV2), the first site (ST1) being able to send a first message (MG1) to the first service (SV1) through the communication channel (SCH), said first message (MG1) requesting the sending of a second message (MG2) from the second service (SV2) to the second site (ST2) through the communication channel (SCH),
**characterized in that** the token (SE) comprises a set (MAT) of rules which contain digital rights associated with interactions between the services (SV1, SV2) and **in that** the token (SE) comprises a supervisor means (CES) adapted to check the set (MAT) and to deny the sending of the second message (MG2) if the checking is unsuccessful.

10. A portable secure token (SE) according to claim 9, wherein said first and second web sites (ST1, ST2) are hosted in a server (SER), wherein said client (CL) is able to connect said server (SER) through a communication channel (SCH) which is intended to transport first and second messages (MG1, MG2).

11. A portable secure token (SE) according to any one of claims 9 to 10, wherein the secure token (SE) comprises a SIM browser (BR) and wherein said SIM browser (BR) comprises the supervisor means (CES).

12. A portable secure token (SE) according to any one of claims 9 to 11, wherein the secure token (SE) is a SIM smart card or a Universal Integrated Circuit Card.

13. A portable secure token (SE) according to claim 9, wherein the interactions between the services (SV1, SV2) may be of different access types and wherein the set (MAT) contains digital rights for each of these access types.

14. A portable secure token (SE) according to claim 9, wherein the first service (SV1) comprises several elements (D11, P11, P12, U11) and wherein the set (MAT) contains digital rights for the interaction between each of said elements (D11, P11, P12, U11) and the second service (SV2).

15. A portable secure token (SE) according to claim 9, wherein the token (SE) comprises a means (M1) adapted to add a subset of rules in the set (MAT) when a third service (SV3) is installed in said client (CL), said subset of rules containing digital rights corresponding to the interaction between the third service (SV3) and said first and second services (SV1, SV2), said means (M1) being able to initialize the subset of rules with default values.
